Europäisches Patentamt

European Patent Office

Office européen des brevets

(19)

(11) Publication number: **0 032 320**
A1

(12) # EUROPEAN PATENT APPLICATION

(21) Application number: **80304767.9**

(22) Date of filing: **30.12.80**

(51) Int. Cl.³: **A 01 K 89/00**

(30) Priority: **17.01.80 US 113236**

(43) Date of publication of application:
**22.07.81 Bulletin 81/29**

(84) Designated Contracting States:
**DE FR GB IT SE**

(71) Applicant: BRUNSWICK CORPORATION
One Brunswick Plaza
Skokie, IL 60077(US)

(72) Inventor: Neufeld, Henry L.
6013 East 57th Place
Tulsa Oklahoma 74135(US)

(74) Representative: Allden, Thomas Stanley et al,
A.A. THORNTON & CO. Northumberland House 303-306
High Holborn
London WC1V 7LE(GB)

(54) On/off selector switch for anti-reverse mechanism.

(57) A spin casting style fishing reel that has an actuator switch (150) that provides the selective OFF/ON selection for the anti-reverse cranking mechanism. The crank shaft (311) is coupled to the reel crank handle and can be rotated in both the forward and reverse directions at will. However, when the fishing line is being reeled in, with or without a fish, it is advantageous for the reel can be cranked in only the forward direction. The actuator (150) activates or deactivates the anti-reverse crank mechanism by simply moving to the desired position.

EP 0 032 320 A1

./...

FIG.4

FIG.9

## BACKGROUND OF THE INVENTION

### 1. Field of the Invention

This invention relates to fishing reels, and more particularly, relates to a spin casting style fishing reel with a new improved anti-reverse mechanism operated by a unique selector switch or actuator.

### 2. Background of the Prior Art

Many types of anti-reverse crank rotation devices have been used in the prior art to prevent or control the direction of rotation of the crank handle of spinning style fishing reels. One such device is depicted in Hull's U. S. Patent No. 4,156,510 where the anti-reverse element is mounted on the center shaft, protected by a retainer or guide bar and actuated by a central lever mounted inside the fishing reel but extending outside thereof. The mechanism is exemplary of many such mechanisms used by Hull and others. One of the major drawbacks of such an arrangement is that the mechanism is mounted on the center shaft and therefore competes for space on the back portion of the center shaft along with the pinion, support spring and spring keeper. Furthermore, the anti-reverse mechanism mounted on the center shaft must be slidable relative to the reel since the center shaft is slidably rotatably mounted in the fishing reel. This arrangement has, at times, caused such a mechanism not to operate correctly or to jam preventing the reel from operating at all.

## SUMMARY OF THE INVENTION

This invention relates to spin casting style fishing reels and comprehends a very smooth operating anti-reverse mechanism that is mounted on the crank shaft of a spin casting reel. A rotatably mounted unique actuator can be moved from an OFF to an ON position thereby bringing into operation, or taking out of operation, the anti-reverse mechanism.

It is therefore an object of this invention to provide a unique side mounted actuator switch for operating an anti-reverse crank mechanism.

It is a further object of this invention to provide such an anti-reverse crank mechanism mounted on the crank shaft of a fishing reel and not on the center shaft.

It is still another object of this invention to provide an actuator having a head rotatably mounted on the exterior of the fishing reel housing.

It is yet another object of this invention to provide for maintaining the actuator under constant tension or biased so that the actuator cannot freely rotate from one position to another.

It is still yet another object of this invention to provide easy-to-see OFF/ON positions for the actuator.

The above and other and further objects and features will be more readily understood by reference to the following detailed description and accompanying drawings.

DETAILED DESCRIPTION OF THE DRAWINGS

Figure 1 is an exploded perspective view of the spin casting style fishing reel containing the invention described herein;

Figure 2 is a partial side elevation view of a part of the fishing reel depicting a portion of the invention hereof;

Figure 3 is a partial cross-sectional view taken along line 3-3 of Figure 2;

Figure 4 is an enlarged perspective view of the actuator of the invention described herein;

Figure 5 is a side elevation view of the actuator depicted in Figure 4;

Figure 6 is a partial side elevation view of a part of the housing of the fishing reel depicting the location of the actuator portion of the invention hereof;

Figure 7 is a partial cross-sectional view of the anti-reverse mechanism and the operable end of the actuator of the invention described herein wherein the actuator is in the OFF position;

Figure 8 is a partial cross-sectional view similar to Figure 7 wherein the actuator is in the ON position; and,

Figure 9 is a rear end elevation view of the spin casting reel containing the invention hereof depicting the relationship between the actuator, anti-reverse mechanism and crank shaft assembly.

### DESCRIPTION OF THE PREFERRED EMBODIMENTS

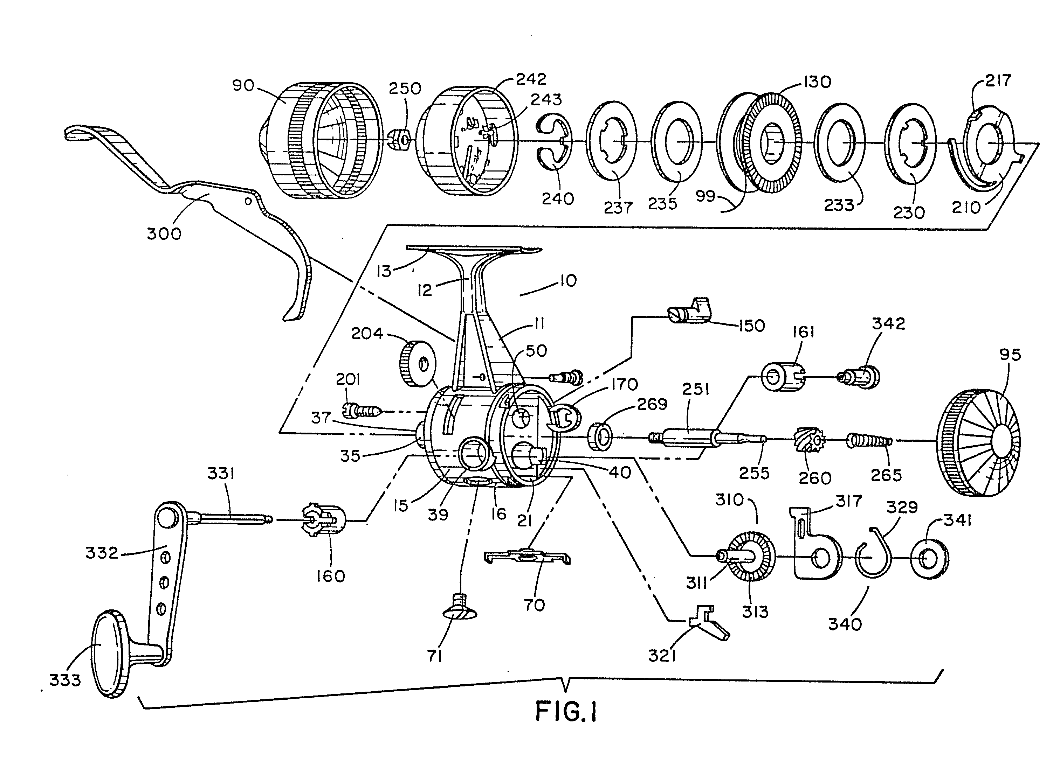

In a fishing reel 10 of the spin casting type containing the preferred embodiments of the invention, Figure 1 generally depicts an exploded perspective view of such a reel. A housing 11, preferably made of a plastic material such as acrylonitrile butadyene styrene (ABS) or glass-filled polycarbonate, has a center deck plate 14 with a forward and rear body portions 15 and 16. A central hub 35 projects forward of the deck plate 14 with a drag plate 210, back spool washer 230, back flat drag washer 233, spool assembly 130, front flat drag washer 235, front spool washer 237, all secured to the hub 35 by means of spool retainer clip 240 which fits into a groove (not shown in Figure 1). A center shaft 251 is mounted in a hole (not shown in Figure 1) in hub 35 with the spinner head 242 mounted on the forward threaded end of the shaft 251 by means of nut 250. The spinner head 242 partially surrounds the forward flange of the spool 130 with fishing line 99 being wound thereon. A front cover 90 secured on the first forward body portion 15 has a front hole (not shown in Figure 1) which acts as a fishing line guide as the line is cast from the reel and rewound after casting.

A clutch head screw 201 is mounted in the interior 21 of the second body portion 16 with clutch wheel 204 mounted on screw 201. Tab 217 fits into the head of screw 201 and when the clutch wheel 204 is revolved upward toward stem 12 and screw 201 advances forward toward the spool retainer clip 240 increasing the clamping force on the spool 130 so that the ability of spool 130 to revolve relative to the hub 35 is decreased. When the wheel 204 is revolved away from the stem 12, the clamping force is decreased and the spool 130 is permitted to revolve relative to hub 35 thus creating the drag mechanism for the fishing reel 10. The center shaft 251 is slidably and rotatably mounted in bearing 269 which is mounted in the deck plate 14. Slidably mounted on center shaft 251 in the second body portion is pinion gear 260 and maintained in place by the center shaft spring 265.

A finger brake lever 300 is mounted on the housing 11 exterior the first body portion 15 and inside the second body portion 16 and being in operable contact with the distal end 255 of the shaft 251. When the exterior portion of the lever 300 is pulled upward toward the mounting foot 13, the center shaft 251 and the spinner head mounted thereon are pushed forward relative to the bearing 269 and the hub 35. The pickup pin mechanism 243 mounted on spinner head 242 cooperates with the cam 37 mounted on the face of hub 35 to maintain the spinner head 242 in a forward position. In this forward position the fishing line 99 can be cast from the reel 10.

Crank gear 310 is coupled with the anti-reverse assembly 340 which comprises a ratchet (on the back side of face gear 313 and not shown in Figure 1), an anti-reverse drag arm 317, a drag spring 329 and spacer washer 341 all mounted on the hollow crank shaft 311. An anti-reverse pawl 321 is mounted in the deck plate 14 and received in between the back of the face gear 313 and drag arm 317 for engageable and disengageable contact with the ratchet. The crank gear 310 is mounted in bearing supports 39 and 40 by sliding between slots in the supports 39 and 40. Crank bearings 160 and 161 mounted in supports 39 and 40 provide suitable bearings for the hollow shaft 311. A crank rod 331 is slip fitted into the hole in shaft 311 and keyed thereto. Crank rod nut 342 is secured to the threaded end to fasten rod 331 to the reel 10. The rod 331 is connected to the crank handle 332 and crank knob 333. The gear 313 is in engageable contact with pinion 260 so that when the crank handle 332 and knob 333 are rotated in the forward direction (toward the front cover) the crank shaft 251 rotates causing the spinner head 242 to rotate as well. This rotative motion disengages the pickup pin mechanism 243 from the hub 35 cam 37 causing the spinner head 242 and shaft 251 to move rearward. This same motion causes the pickup pin of the mechanism 243 to extend outwardly beyond the spinner head 242 so that the fishing line 99 can be wound on the spool 130.

Anti-reverse actuator 150 is mounted in upper housing hole 50 and retained therein by retainer clip 170. The actuator 150 is in cooperative contact with the anti-reverse drag arm 317. In one position the actuator 150 disengages the anti-reverse assembly 340 permitting the crank rod 331 and the crank assembly to rotate in either the forward direction (upward toward the stem 12) or the reverse direction (downward from the stem 12 toward the back of the reel).

A back cover 95 is secured on the second back portion 16 to enclose the reel 10. Cover lock 70 is mounted within the housing 11 and is tightened in place by screw 71 clamping the covers 90 and 95 to the housing.

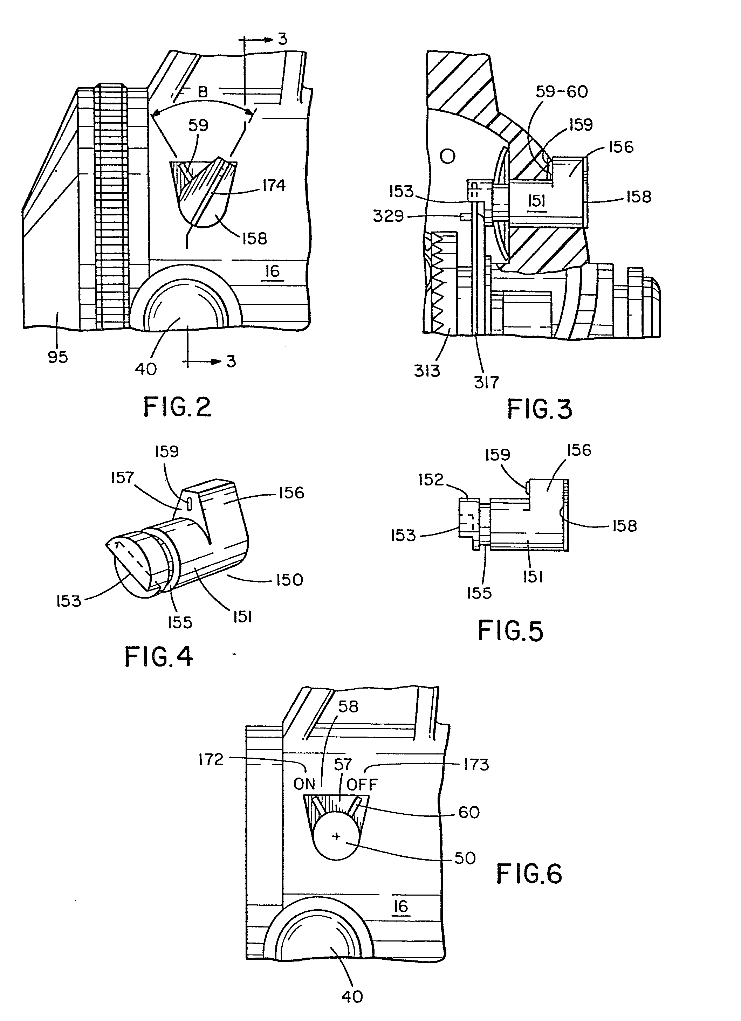

In a preferred embodiment of the invention depicted primarily in Figures 4 and 5, the OFF/ON selector switch for an anti-reverse mechanism comprises the actuator 150 having stem 151 with cam 153 at the distal end 152 and with head 156 secured to the proximal end 158. In the second or rearward body portion 16, hole 50 passes from the exterior surface 20 to the interior surface 21. On the exterior surface 20 surrounding the hole is area 58 with the ON and OFF positions designated at 172 and 173. Preferably, the area 58 is planar as depicted in Figures 2, 3 and 6 to accommodate the flat underside 157 of the head 156. The flat area 57 has two radially extending slots 59 and 60 from the center axis of hole 50. For the actuator 150 to be pivotally mounted in the hole 50, a retainer clip 170 in a C-shaped spring arrangement is snapped into groove 155 biasably holding the actuator 150. The protrusion 159 on the flat underside 157 is engageable with and received in the slots 59 or 60 and best seen in Figure 3. On the outer surface 158 of the head 156 is an indicator 174 pointing to the designations 172 or 173 thereby indicating the position of the cam 153.

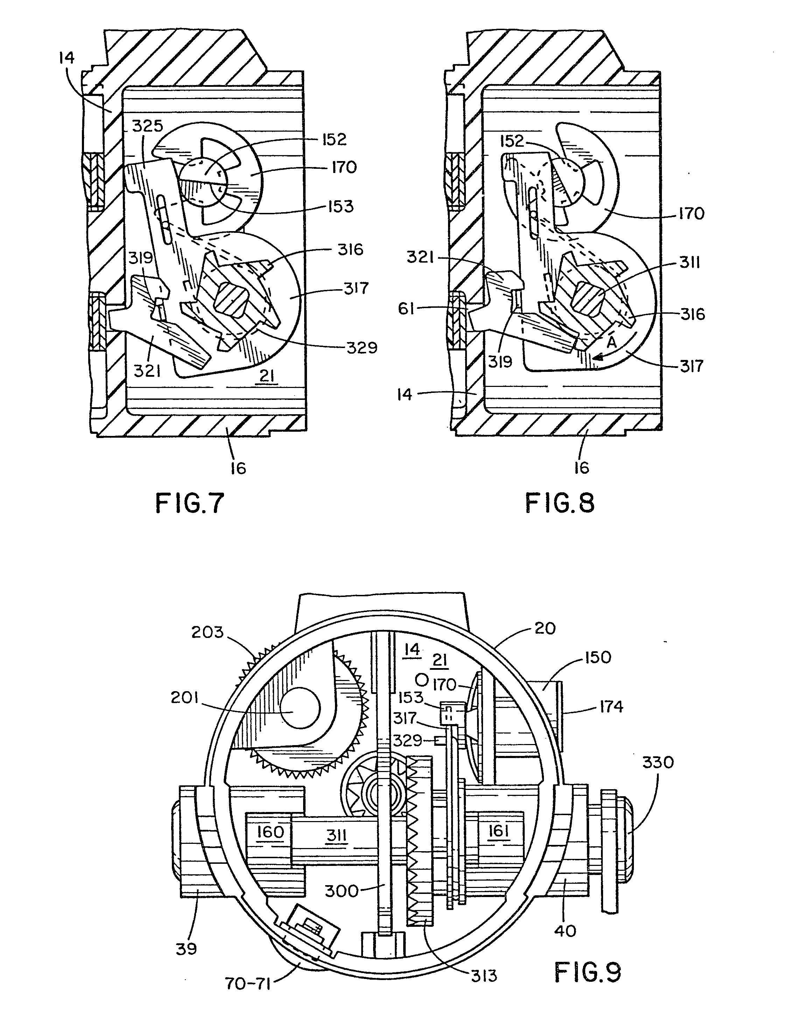

The cam 153 is in operable contact with the anti-reverse drag arm 317, as best seen in Figures 7 and 8. When the indicator 174 is pointed to the OFF position 173 shown in Figure 7, the cam 153 is forcing the upper stem 325 forward toward the deck plate 14. In this position, the protrusion 159 snaps into position in slot 60. The axial spring tension created by retainer clip 170 keeps the actuator 150 in the desired position and prevents it from becoming dislodged when the reel is used for casting or fishing. When the actuator head 156 is moved to the ON position 172 and the protrusion 159 in slot 59, the cam 153 is rotated to the position as seen in Figure 8 whereby the crank shaft 311 is rotated in a reverse direction according the arrow A. Spring 329 causes the drag arm 317 to revolve away from the deck plate 14 with the tab 319 engaging the short leg of pawl 321. When this occurs, the long pawl leg 321 catches a ratchet 316 tooth and prevents further rotation of the crank shaft 311.

Preferably, the actuator 150 may be made from the same material as the housing 11. For ease of operation, the stem 151 is slip fitted into hole 50. It has been found desirable that angle A between the two slots 59 and 60 is about 50° to 100° and most preferably about 70°. This small angular movement enables easy miniaturization of the fishing reel. From the construction described, the spring clip 170 biasably holds the actuator 150 in place so that the protrusion 159 can be kept either in slot 59 or 60. In fishing reels tested with the actuator 150 and the spring retainer 170 arrangement, the correct cranking position has always been maintained.

It should be understood, of course, that the specific forms of the invention illustrated and described herein are intended to be representative only, as certain changes and modifications may be made without departing from the scope of the teachings disclosed herein. Accordingly, reference should be made to the appended claims in ascertaining the full scope of the invention.

CLAIMS:

1. A fishing reel with a gear crank assembly mounted therein comprising:

    (a) a housing having a deck plate and body portions with exterior and interior surfaces, a first portion projecting forward of the plate and a second portion projecting rearward of the plate, a passageway in the second portion leading from the exterior surface to the interior surface, an area surrounding the passageway on the exterior surface;

    (b) an anti-reverse actuator comprising:

        (i) a stem having a cam surface on the distal end, a proximal end and an undercut groove near the cam surface,

        (ii) a head having a flat underside secured to the proximal end and an outer surface, the stem rotatably mounted in the passageway with the underside of the head adjacent to the area,

    (c) retainer means mounted in the actuator groove retaining the actuator in the passageway;

    (d) selective anti-reverse means mounted in the housing in operable engagement with the crank assembly limiting the rotation of the crank assembly to a 1st forward direction when in the on position and permitting rotation of the crank assembly in both the 1st forward and a 2nd reverse direction when

in the <u>off</u> position,

     (e) the cam surface in operable contact with the anti-reverse means such that when the head is in a first position (back) the anti-reverse means is in the <u>on</u> position and when the head is rotated to a second position (forward) the anti-reverse means is in the <u>off</u> position.

    2. The reel of Claim 1 wherein the passageway is circular.

    3. The reel of Claim 2 wherein the passageway has a central axis.

    4. The reel of Claim 3 wherein the stem is coaxial with the passageway axis.

    5. The reel of Claim 4 wherein the area surrounding the exterior opening is planar.

    6. The reel of Claim 5 wherein the planar area has a pair of undercut slots in a plane that is perpendicular to the passageway axis.

    7. The reel of Claim 6 wherein the slots are radially spaced apart.

    8. The reel of Claim 7 wherein the slots are spaced apart an angle ranging from approximately 50 degrees to 100 degrees.

    9. The reel of Claim 7 wherein the radial slots are spaced apart approximately 70 degrees.

    10. The reel of Claim 7 wherein the underside of the head has a protrusion projecting toward the planar area.

    11. The reel of Claim 10 wherein the protrusion is in operable engagement with the slots.

    12. The reel of Claim 11 wherein the retainer biasably holds the actuator in the passageway.

    13. The reel of Claim 12 wherein the combination of the protrusion in the slot and the retainer in the groove prevent the actuator from accidentally rotating from one slot to the other.

14. The reel of Claim 1 or Claim 13 wherein the retainer is C-shaped.

15. The reel of Claim 14 wherein the retainer is a disc spring.

16. The reel of Claims 1 or 13 wherein the outer surface of the head has an indicator mark.

17. The reel of Claims 6 or 13 wherein an <u>on</u> designation is above one slot and an <u>off</u> designation is above the other slot.

18. The reel of Claim 17 wherein the indicator mark points to either the <u>on</u> or <u>off</u> designation.

19. The reel of Claim 18 wherein the slots radially project from the axis toward the designations <u>on</u> or <u>off</u> being aligned therewith.

20. The reel of Claim 19 wherein the protrusion projects radially outwardly from axis and is in alignment with the slots.

21. The reel of Claim 20 wherein the slots and protrusion mate.

22. The reel of Claims 1 or 13 wherein the cam surface is a planar surface.

23. The reel of Claim 22 wherein the planar surface cam defines a semi-circular portion on the distal end.

FIG.1

FIG.2

FIG.3

FIG.4

FIG.5

FIG.6

FIG.7

FIG.8

FIG.9

## European Patent Office — EUROPEAN SEARCH REPORT

Application number

EP 80 30 4767.9

### DOCUMENTS CONSIDERED TO·BE RELEVANT

### CLASSIFICATION OF THE APPLICATION (Int. Cl.3)

| Category | Citation of document with indication, where appropriate, of relevant passages | Relevant to claim |
|---|---|---|
| | DE - B - 2 033 472 (ETS CARPANO ET PONS) <br> * column 3, lines 1 to 6 and lines 38 to 53; fig. 3, 4 * <br> -- | 1 |
| D,A | US - A - 4 156 510 (LULA BELLE HULL) <br> * column 5, line 60 to column 6, line 20; fig. 2 * <br> ---- | |

A 01 K 89/00

### TECHNICAL FIELDS SEARCHED (Int. Cl.3)

A 01 K 89/00

### CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

X  The present search report has been drawn up for all claims

| Place of search | Date of completion of the search | Examiner |
|---|---|---|
| Berlin | 10-04-1981 | LEITHÄUSER |

EPO Form 1503.1  06.78